# EUROPEAN PATENT SPECIFICATION

(11) **EP 3 316 740 B1**
(45) Date of publication and mention of the grant of the patent: **19.02.2020**
(21) Application number: 16747551.6
(22) Date of filing: 01.07.2016
(51) Int. Cl.: A47J 27/21

(54) **KETTLE**
WASSERKOCHER
BOUILLOIRE

(30) Priority: 01.07.2015 GB 201511535
(43) Date of publication of application: 09.05.2018
(73) Proprietor: Gort-Barten, Leslie Alexander, Crawley, Sussex RH11 7ST (GB); Gort-Barten, Alex, Crawley, West Sussex RH11 7ST (GB)
(72) Inventor: Gort-Barten, Leslie Alexander, Crawley, Sussex RH11 7ST (GB); Gort-Barten, Alex, Crawley, West Sussex RH11 7ST (GB)
(74) Representative: JENSEN & SON
(86) International application number: PCT/GB2016/051999
(87) International publication number: WO 2017/001866

(56) References cited:
- GB-A- 1 207 502
- GB-A- 2 321 176
- GB-A- 2 488 204

## Description

The invention relates to a kettle.

Electric kettles are a well-established part of kitchens in Europe and elsewhere and represent an energy efficient way of boiling water for use in making hot drinks and also for cooking purposes, in particular compared to boiling a pan of water on a hob.

The market for kettles has converged on a vessel volume of around 1.51 and come in two main designs, the jug kettle and the classic or dome type kettle. Both types of kettle will have a minimum fill level, which is usually set at 0.51 due to the design constraints of the heating elements. The jug kettle is often filled with water through its spout, located at the upper end of the kettle body, which faces upwards and the both the jug and classic design can be filled through the lid. The classic kettle also generally has an upwards facing spout. These design aspects have been adopted to avoid the risk of boiling water spitting out from the kettle towards the end of the boiling process or when boiled water is being poured.

The known designs suffer from a particular drawback caused by the minimum boil size, which has two adverse consequences. The first is that much water is boiled and not used, which results in significant waste of energy. The second is that for users suffering from arthritis in the hand or arm, the kettle becomes too heavy to use comfortably. Examples of such prior art kettles can be found in GB221832, US2006043124 and WO2012085602. Although the market provides mini-kettles having a small volume, these are of limited utility for many users. GB2488204 relates to a kettle with a spill inhibiting system comprising at least two channels. In use, when the kettle is in an upright position at least one of the channels vents the kettle; when the kettle is tipped over, at least one of the channels vents the kettle whilst the flow of liquid from the kettle through the channels is prevented.

The present invention therefore seeks to provide a kettle that addresses these problems and that in particular is easier for arthritis sufferers to use.

According to the invention there is kettle in accordance with the characteristics of claim 1 Preferably, the first fluid connection is located in a kettle wall at a height above the heating element. Preferably, the first fluid connection is located substantially at the height of the upper surface of 250ml of liquid in the main body. Preferably, the plurality of apertures of the holder are provided with a first and second lower edge arrange substantially at right angles to one another.

The kettle according to the invention has a reduced pour angle compared to the known kettles. This enables an arthritis sufferer to pour the boiled water with less strain being placed on the wrist.

An exemplary embodiment of the invention will now be described in greater detail with reference to the drawings in which:
Fig. 1 shows a cross section of a kettle
Fig. 2 shows a detail in perspective of a baffle of the kettle

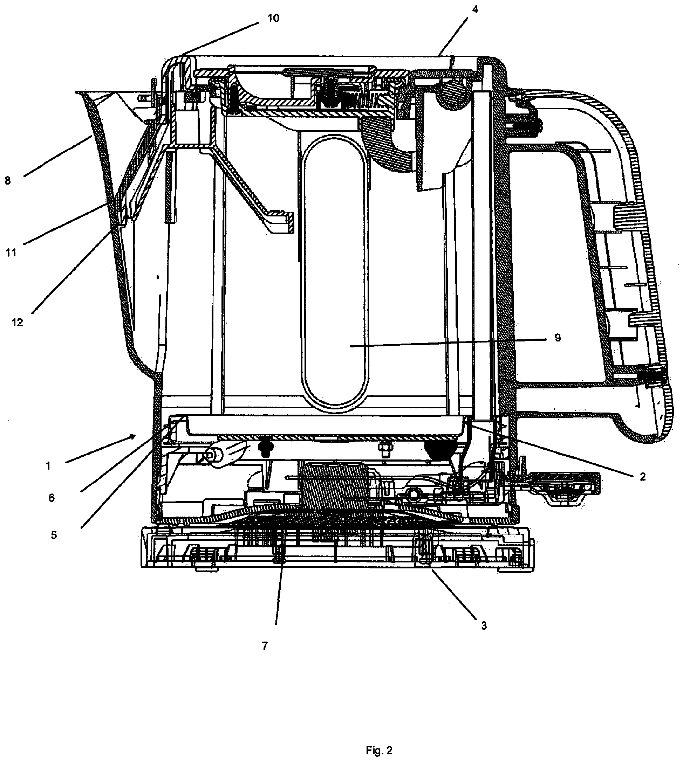

Figure 1 shows a cross section of a kettle comprising a main body assembly 1, a pressure seal assembly unit 2 and a subbase 3. The pressure seal assembly unit 2 comprises a planar element 5, with a circumferential seal 6 as well as the electrical connections 7 to enable electricity to be supplied to the element 5. The kettle is assembled by inserting the pressure seal assembly unit into the jug body so that the planar element 5 forms the base to the water tank of the kettle with the circumferential seal ensuring that the seal is watertight. The element protector and other internal parts are assembled and then the subbase 3 is fitted. The kettle body is closed by a hinged lid 4.

The body of the kettle is provided with a spout 8, which has an opening into the interior of the kettle body at a level a small distance above the heating element 5 to provide fluid communication, eg for water and steam. This opening is below the median of the kettle body, i.e. the distance defined by a plane substantially at the midpoint between the heating element and the lid. The spout extends up the kettle body terminating in an opening through which the water will be poured from the kettle a short distance from the lid 4. The volume provided by the spout therefore forms part of the main interior volume of the kettle so that water in the spout is boiled. By locating the spout cavity entrance near to the base of the main body 1, the pour angle, i.e. the angle to the vertical at which the water can be poured from the kettle, is reduced. This in turn reduces the amount of movement in the users' wrists, which is a cause of arthritic pain. The pour angle of the kettle is reduced by around 15° in contrast to other known designs in the market.

The body of the kettle is provided with a large window 9, the lower extent of which is located close to the element 5, which enables a low minimum volume of about 250ml to be used. This volume equates to about one cup of tea or mug of coffee. This enables users to only boil the required amount of water and again reduces the weight that must be lifted by users with arthritic wrists. As the water level at 250ml is such that water will be in the spout cavity, the pouring action will also be smooth.

A filter assembly is mounted on the kettle body wall extending into the spout cavity. The filter assembly comprises a filter holder 10, filter 11 and baffle 12 described in greater detail below. The filter holder 10 is mounted on the lid and is provided with a plurality of holes which enable steam to escape from the interior to thereby provide some pressure control in the kettle body head room. This reduces the possibility of boiling water spurting out of the kettle during boiling, controls the switch off time and enables water to drain when pouring to the maximum extent when the kettle is at 90° to the horizontal. The holes have a tear drop shape with the lower opening edges being at substantially right angles to one another which significantly reduces the formation of a meniscus, which could otherwise trap a small volume of water. This could lead to spurting on a subsequent boil or cause an early shut off.

The filter 11 extends into the spout space and filters any large calcium deposits, common in hard water areas, that may have dislodged into the kettle interior. The filter holder is provided with a seal to prevent any water from entering the lid if the kettle is tilted beyond the horizontal. The filter 11 has a crescent moon shape protruding element, which encourages the water to flow towards the centre of the spout and hence provide a smoother flow.

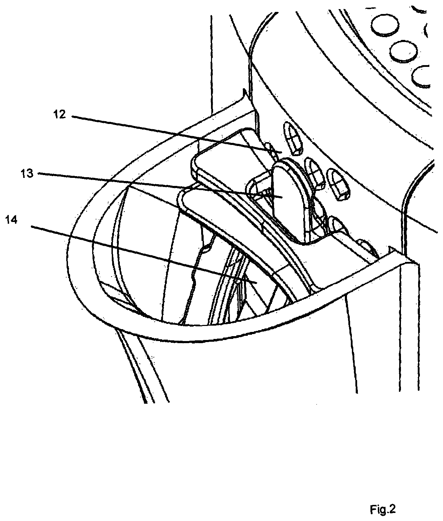

Figure 2 shows a perspective view from above of the baffle in position with the filter holder and filter removed for clarity. The baffle 12 is provided to prevent spurting during boiling or during pouring immediately after boiling, in particular that which may otherwise occur. The baffle reduces the maximum flow rate from the spout to provide a controlled flow. It also allows steam to escape from the head room from behind the upstand 13. In addition to allowing steam to escape from the head room it also allows water when poured at 90° so that there is a second fluid communication passage. The upstand 13 prevents the kettle from spurting in over pour (i.e. greater than 90°) as the water is forced into the main flow by flowing around the gaps between the edges of the upstands and the screw mounts located just behind the upstand. There is therefore a passage from behind the upstand 13 into the interior of the kettle. The holes in the filter holder are located spatially separated behind the upstand 13. The tongue 14 stops water spurting from the spout cavity during boiling.

## Claims

1. A kettle for boiling liquids comprising a main body (1), a lid (4), which main body (1) is closeable by the lid (4), a heating element (5) located at the bottom of the interior of the main body (1) and a spout (8), wherein the spout (8) is in fluid connection with the interior of the main body (1) to enable liquids to be poured from the kettle, wherein the fluid connection comprises a first fluid connection to the interior of the main body (1) and is located between the median of the main body (1) and the heating element (5), wherein there is a second fluid connection between the interior of the main body (1) and the spout (8), which second fluid connection is located between the median of the main body (1) and the lid (4), wherein a baffle (12) is provided, which baffle (12) regulates flow of fluid from the first and the second fluid connections, said baffle comprising a tongue adapted to regulate flow from the first fluid connection and an upstand to regulate flow from the second fluid connection **characterised in that** the spout (8) extends up the main body (1) from a spout cavity entrance located near the base of the main body, below the median of the main body, until terminating in an opening at a short distance from the lid through which water will be poured from the kettle and **in that** the second fluid connection comprises a passage adjacent to the lid and is provided with a holder having a plurality of openings.

2. A kettle according to Claim 1, wherein the first fluid connection is located in a kettle wall at a height above the heating element (5).

3. A kettle according Claim 1 or Claim 2, wherein the first fluid connection is located substantially at the height, in use, of the upper surface of 250ml of liquid in the main body.

4. A kettle according to any one of Claims 1 to 3, wherein the second fluid connection comprises a passage adjacent to the lid (4) and is provided with a holder (10), which holder (10) is provided with a plurality of apertures, which apertures are provided with a first and second lower edge arranged substantially at right angles to one another.

## Patentansprüche

1. Ein Wasserkocher zum Kochen von Flüssigkeiten, umfassend ein Hauptgehäuse (1), einen Deckel (4), wobei das Hauptgehäuse (1) durch den Deckel (4) verschließbar ist, ein Heizelement (5), das sich am Boden des Inneren des Hauptgehäuses (1) befindet, und einen Ausgießer (8), wobei der Ausgießer (8) in Flüssigkeitsverbindung mit dem Inneren des Hauptgehäuses (1) steht, so dass Flüssigkeiten aus dem Wasserkocher ausgegossen werden können, wobei die Flüssigkeitsverbindung eine erste Flüssigkeitsverbindung zum Inneren des Hauptgehäuses (1) umfasst und zwischen dem Median des Hauptgehäuses (1) und dem Heizelement (5) liegt, und wobei eine zweite Flüssigkeitsverbindung zwischen dem Inneren des Hauptgehäuses (1) und dem Ausgießer (8) besteht, wobei die zweite Flüssigkeitsverbindung zwischen dem Median des Hauptgehäuses (1) und dem Deckel (4) liegt, und wobei eine Leitvorrichtung (12) vorhanden ist, wobei diese Leitvorrichtung (12) den Fluss der Flüssigkeit aus der ersten und der zweiten Flüssigkeitsverbindung regelt und die Leitvorrichtung einen Ansatz hat, der darauf ausgelegt ist, den Fluss aus der ersten Flüssigkeitsverbindung zu regeln, sowie eine Aufkantung, die den Fluss aus der zweiten Flüssigkeitsverbindung regelt, **dadurch gekennzeichnet, dass** sich der Ausgießer (8) von einer Ausgießer-Höhlungsöffnung in der Nähe der Unterseite des Hauptgehäuses, unter dem Median des Hauptgehäuses, am Hauptgehäuse (1) nach oben erstreckt, bis er in einer Öffnung unweit des Deckels endet, durch die das Wasser aus dem Wasserkocher ausgegossen wird, und wobei die zweite Flüssigkeitsverbindung einen Durchgang neben dem Deckel umfasst und mit einem Halter versehen ist, der mehrere Öffnungen besitzt.

2. Ein Wasserkocher nach Anspruch 1, wobei sich die erste Flüssigkeitsverbindung in einer Wasserkocherwand in einer Höhe über dem Heizelement (5) befindet.

3. Ein Wasserkocher nach Anspruch 1 oder Anspruch 2, wobei die erste Flüssigkeitsverbindung während des Betriebs im Wesentlichen in Höhe der Oberfläche von 250 ml Flüssigkeit im Hauptgehäuse liegt.

4. Ein Wasserkocher nach einem der Ansprüche 1 bis 3, wobei die zweite Flüssigkeitsverbindung einen Durchgang neben dem Deckel (4) umfasst und mit einem Halter (10) versehen ist, wobei der Halter (10) mehrere Öffnungen hat, deren erste und zweite untere Kante im Wesentlich rechtwinklig zueinander ausgerichtet sind.

## Revendications

1. Bouilloire pour faire bouillir des liquides comprenant un corps principal (1), un couvercle (4), lequel corps principal (1) peut être fermé par le couvercle (4), un élément chauffant (5) situé au fond de l'intérieur du corps principal (1) et un bec verseur (8), dans laquelle le bec verseur (8) est en connexion fluidique avec l'intérieur du corps principal (1) pour permettre à des liquides d'être versés de la bouilloire, dans laquelle la connexion fluidique comprend une première connexion fluidique à l'intérieur du corps principal (1) et est située entre la médiane du corps principal (1) et l'élément chauffant (5), dans laquelle il y a une seconde connexion fluidique entre l'intérieur du corps principal (1) et le bec verseur (8), laquelle seconde connexion fluidique est située entre la médiane du corps principal (1) et le couvercle (4), dans laquelle une chicane (12) est prévue, laquelle chicane (12) régule l'écoulement de fluide depuis la première et la seconde connexions fluidiques, ladite chicane comprenant une languette adaptée à réguler l'écoulement depuis la première connexion fluidique et un prolongement pour réguler l'écoulement depuis la seconde connexion fluidique, **caractérisée en ce que** le bec verseur (8) s'étend le long du corps principal (1) depuis une entrée de cavité de bec verseur située près de la base du corps principal, en dessous de la médiane du corps principal, jusqu'à se terminer dans une ouverture à une courte distance du couvercle à travers laquelle de l'eau sera versée de la bouilloire et **en ce que** la seconde connexion fluidique comprend un passage adjacent au couvercle et est pourvue d'un support ayant une pluralité d'ouvertures.

2. Bouilloire selon la revendication 1, dans laquelle la première connexion fluidique est située dans une paroi de bouilloire à une hauteur au-dessus de l'élément chauffant (5).

3. Bouilloire selon la revendication 1 ou la revendication 2, dans laquelle la première connexion fluidique est située essentiellement à la hauteur, en cours d'utilisation, de la surface supérieure de 250 ml de liquide dans le corps principal.

4. Bouilloire selon l'une quelconque des revendications 1 à 3, dans laquelle la seconde connexion fluidique comprend un passage adjacent au couvercle (4) et est pourvue d'un support (10), lequel support (10) est pourvu d'une pluralité d'ouvertures, lesquelles ouvertures sont pourvues d'un premier et second bord inférieur agencé essentiellement à des angles droits l'un par rapport à l'autre.
